# EUROPEAN PATENT APPLICATION

(11) **EP 2 963 096 A1**
(43) Date of publication of application: **06.01.2016**
(21) Application number: 15172596.7
(22) Date of filing: 17.06.2015
(51) Int. Cl.: C09K 5/04

(54) **MIXTURE REFRIGERANT AND AIR CONDITIONER USING THE SAME**

(30) Priority: 01.07.2014 JP 2014136292
(71) Applicant: Fujitsu General Limited, Kanagawa 213-8502 (JP)
(72) Inventor: ITAKURA, Shunji, Kawasaki-shi Kanagawa 213-8502 (JP); FUNADA, Kazuya, Kawasaki-shi Kanagawa 213-8502 (JP); FUJI, Toshiyuki, Kawasaki-shi Kanagawa 213-8502 (JP); TSUCHIYA, Yuji, Kawasaki-shi Kanagawa 213-8502 (JP); KONDO, Masahiro, Kawasaki-shi Kanagawa 213-8502 (JP)
(74) Representative: Kreutzer, Ulrich

(57) **Abstract**

A mixture refrigerant includes: 50 wt.% to 70 wt.% of R32, R1234ze, and R125. An air conditioner includes a mixture refrigerant containing 50 wt.% to 70 wt.% of R32, R1234ze, and R125.

## Description

### Background of the Invention

### 1. Field of the Invention

The present invention relates to a mixture refrigerant which circulates in a refrigerant circuit provided in, for example, an air conditioner and an air conditioner using the mixture refrigerant.

### 2. Background Art

In recent years, R410A is used as the refrigerant which circulates in a refrigerant circuit provided in an air conditioner, such as an air conditioning apparatus. R410A is a mixture refrigerant which contains 50% of R32 and 50% of R125. The global warming potential (hereinafter, referred to also as GWP) of the R410A is 2088, and thus the GWP thereof is relatively high. Accordingly, it is necessary to replace R410A with a refrigerant having a low GWP. Recently, an air conditioning apparatus which uses, for example, only R32 has been developed. The GWP of R32 is 675 which is approximately one third of that of R410A, and thus the GWP thereof is relatively low. However, R32 is classified as a slightly flammable refrigerant which has slight combustion properties.

When R32 is used as the refrigerant for a household air conditioning apparatus, the household air conditioner requires an explosion-proof design as a countermeasure of the slight combustion properties. Furthermore, in a case of a large-scale multiple-air conditioning apparatus for a building, the amount of refrigerant in use is large. Accordingly, when, during an operation of an air conditioning apparatus or maintenance work, refrigerant leaks to the outside of the air conditioner and is ignited, there is a concern in that damage may be increased.

Meanwhile, R1234ze is known as the refrigerant which can be used for an air conditioning apparatus (see, for example, Japanese Patent No. 5021079). The GWP of R1234ze is 6, and thus the GWP thereof is significantly low. However, refrigerant properties, such as the latent heat, of R1234ze is considerably lower than that of R410A or R32. Accordingly, in terms of the entirety of the apparatus, which includes power consumption, there is a problem in relation to global warming prevention.

Accordingly, it is necessary to develop a refrigerant which has a refrigerant performance comparable to that of R410A, a GWP lower than that of R410A, and combustion properties lower than those of R32.

For the foregoing reasons, there is a need for a refrigerant which has a refrigerant performance comparable to that of R410A, a GWP lower than that of R410A, and combustion properties lower than those of R32.

### Summary of the Invention

It is an object of the present invention to at least partially solve the problems in the conventional technology.

A mixture refrigerant according to one aspect of the present invention includes 50 wt.% to 70 wt.% of R32, R1234ze, and R125.

An air conditioner according to another aspect of the invention includes the mixture refrigerant described above.

The above and other objects, features, advantages and technical and industrial significance of this invention will be better understood by reading the following detailed description of presently preferred embodiments of the invention, when considered in connection with the accompanying drawings.

### Brief Description of the Drawings

Fig. 1 is a composition chart according to a trilinear chart which illustrates an embodiment of a mixture refrigerant according to the invention.
Fig. 2 is a schematic chart explaining refrigerant properties according to a composition ratio of the mixture refrigerant according to the embodiment.
Fig. 3 is a detail chart explaining refrigerant properties according to a composition ratio.
Fig. 4 is a detail chart explaining refrigerant properties according to a composition ratio.
Fig. 5 is a detail chart explaining refrigerant properties according to a composition ratio.
Fig. 6 is a detail chart explaining refrigerant properties according to a composition ratio.
Fig. 7 is a detail chart explaining refrigerant properties according to a composition ratio.

### Embodiment of the Invention

Hereinafter, the details of an embodiment of a mixture refrigerant according to the invention and an air conditioner using the mixture refrigerant will be described with reference to the accompanying drawings. In addition, the invention is not limited by the embodiment.

### Mixture Refrigerant

First, the mixture refrigerant according to the embodiment will be described.

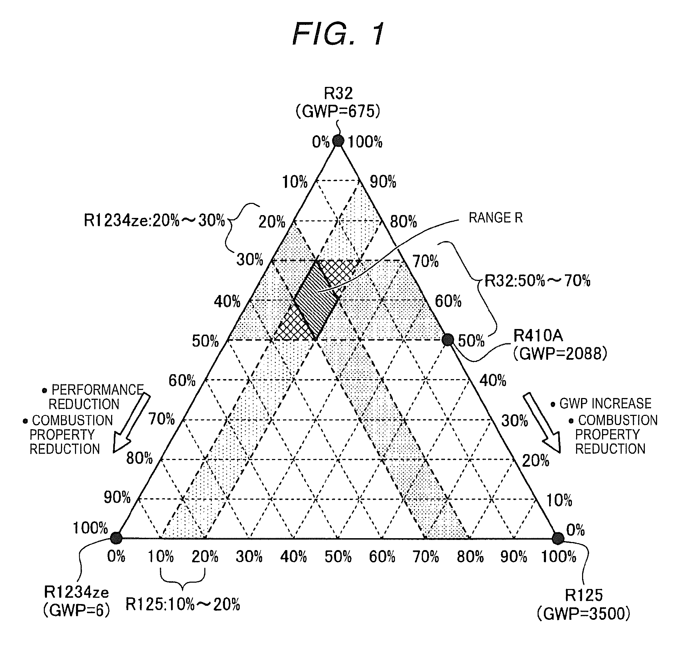

Fig. 1 is a trilinear chart illustrating a composition of the mixture refrigerant according to the embodiment. The trilinear chart is a graph in which respective sides of an equilateral triangle are shown as a graph and are used as three items and the ratio of the three items is expressed by the lengths of perpendicular lines extending from a point inside the equilateral triangle to the respective sides. The trilinear chart uses a characteristic that the sum of the lengths of perpendicular lines extending from a certain point inside an equilateral triangle to respective sides is a constant value. The constant value corresponds to 100% which is the sum of the ratio of the three items. In this case, the three apices indicate a point in which there is 100 wt.% of R32, a point in which there is 100 wt.% of R1234, and a point in which there is 100 wt.% of R125. The mixture ratio of the mixture refrigerant according to the embodiment is located in a range R of Fig. 1. Specifically, the mixture refrigerant of the embodiment contains 50 wt.% to 70 wt.% of R32, 20 wt.% to 30 wt.% of R1234ze, and 10 wt.% to 20 wt.% of R125.

Here, respective refrigerants of R32, R1234ze, and R125 have advantages and disadvantages, in terms of properties.

The GWP of R1234ze is 6, and thus the GWP thereof is significantly low. In addition, the amount of latent heat thereof, which is one of the indices of refrigerant performance, is 150.22 kj/kg (when saturation temperature=45°C), and thus the amount of the latent heat is low. Furthermore, a combustion velocity thereof, which is one of the indices of combustion properties, is 5.2 cm/s.

The GWP of the R125 is 3500, and thus the GWP thereof is significantly high. In addition, the amount of latent heat thereof, which is one of the indices of refrigerant performance, is 84.53 kj/kg (when saturation temperature=45°C). However, R125 is a nonflammable refrigerant (of which the combustion velocity is 0 cm/s).

The GWP of the R32 is 675, and thus the GWP thereof is relatively low. In addition, the amount of latent heat thereof, which is one of the indices of refrigerant performance, is 224.0 kj/kg (when saturation temperature=45°C), and thus the latent heat thereof is relatively favorable. Meanwhile, a combustion velocity thereof, which is one of the indices of combustion properties, is 6.7 cm/s, and thus the combustion velocity is high.

Accordingly, the mixture refrigerant of the embodiment, which is obtained by mixing refrigerants of the three types, which are R1234ze, R125, and R32, at a predetermined mixing ratio, which will be described later, has properties derived from properties of the respective refrigerants in accordance with the mixture ratio of respective refrigerants.

In Fig. 1, the position of R410A is illustrated, as reference, in a middle portion of a right side of the trilinear chart. R410A is a mixture refrigerant which contains 50% of R32 and 50% of R125.

The mixture ratio of the mixture refrigerant according to the embodiment is located in the range R which is illustrated in Fig. 1 with hatching lines. In the embodiment, R32 of which the refrigerant performance is relatively favorable is used as a base material and R125 which is a nonflammable refrigerant is added to the base material. However, the composition ratio of R125 is set to a value equal to or greater than 10% so that the combustion velocity thereof at the time of ignition is lower than that of R32 (the combustion velocity of R32 is 6.7 cm/s).

Here, R1234ze having a significantly low GWP is added because, when the composition ratio of R125 is increased, the GWP thereof is increased. In this case, it is necessary to set the composition ratio of R1234ze to a value equal to or greater than 20%, in order to suppress the GWP of the mixture refrigerant of the three refrigerants below approximately half the GWP of R410A. However, when the composition ratio of R1234ze is excessively increased, the refrigerant performance thereof are decreased. As a result, the composition ratio of R1234ze having a high boiling point is limited to a value equal to or less than 30%.

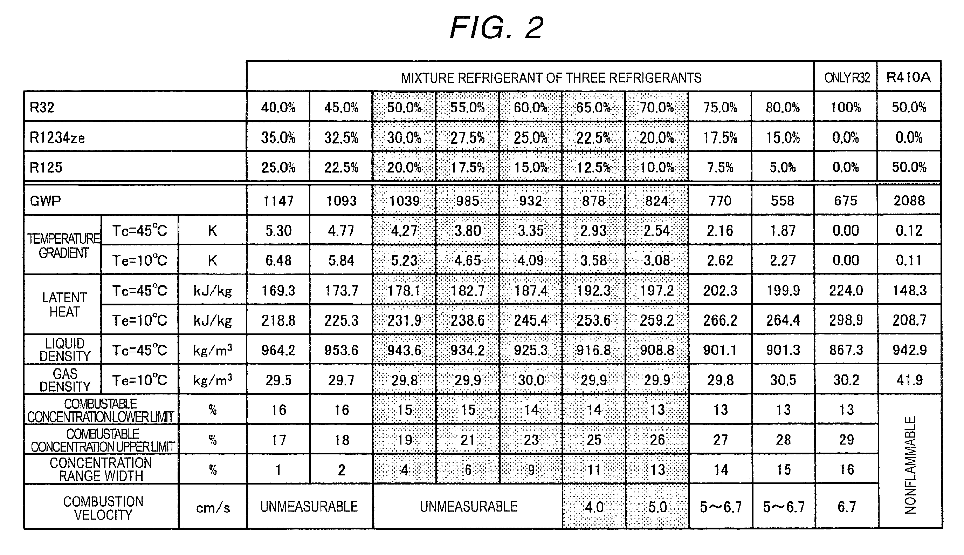

Fig. 2 is a schematic chart explaining refrigerant properties according to a composition ratio of the mixture refrigerant according to the embodiment.

In Fig. 2, a mixture refrigerant in which the composition ratio of R32 is set to 50 wt.% to 70 wt.% and the composition ratio of R1234ze is set to 20 wt.% to 30 wt.% corresponds to the mixture refrigerant according to the embodiment. The row in the right end illustrates refrigerant properties of R410A. The second row from the right end illustrates refrigerant properties of R32.

6.7 cm/s of the combustion velocity of R32 itself is an index of the combustion properties of the mixture refrigerant according to the embodiment. The meaning of "the combustion properties of the mixture refrigerant are lower than those of R32" is that the combustion velocity thereof is lower than 6.7 cm/s of the combustion velocity of R32 itself. In this case, the combustion velocity of a refrigerant is measured by a measurement method based on IS0817.

When the mixture ratio of R32 is set to 70%, the combustion velocity of the mixture refrigerant is 5.0 cm/s. Thus, the combustion velocity of the mixture refrigerant is set to be significantly lower (in other words, reduced by 25% or less) than 6.7 cm/s. When the composition ratio of R32 is suppressed to 70% or lower, as described above, the combustion velocity of the mixture refrigerant can be significantly reduced. Damage at the time of ignition can be reduced, compared to in the case of R32, by setting the combustion velocity to be lower than that of R32, as described above.

In the item of the combustion velocity of Fig. 2, the meaning of "5~6.7" is that the value of the combustion velocity is located in the range of 5 cm/s to 6.7 cm/s. In addition, the meaning of "unmeasurable" is that the value of the combustion velocity is the measurement limit or below of a measuring device.

Meanwhile, the GWP of R410A in the right end row is 2088. An object of the embodiment is to significantly (equal to or less than half the GWP of R410A) reduce the GWP. When the composition ratio of R32 is set to a value equal to or greater than 50%, the GWP thereof is equal to or less than 1039. Accordingly, the GWP of the mixture refrigerant can be reduced to a value equal to or less than half the GWP of R410A. Furthermore, when the composition ratio of R32 is set to a value equal to or less than 45%, the GWP thereof is equal to or greater than 1093. Accordingly, the GWP of the mixture refrigerant cannot be reduced to a value equal to or less than half the GWP of R410A.

Meanwhile, when the temperature gradient (a temperature difference between a saturated gas and a saturated liquid at the same pressure) which is one of the indices of refrigerant properties of the mixture refrigerant is large, a heat-transfer performance is reduced. Accordingly, reduction in performance of an air conditioner using the mixture refrigerant is large. Accordingly, it is preferable that the temperature gradient of the mixture refrigerant is set to a value equal to or less than 5K. The latent heat which is properties of refrigerant is also one of the indices of a refrigerant performance. When the latent heat of the mixture refrigerant is large, compared to that of R410A, even when there is reduction in heat-transfer performance due to the temperature gradient of approximately 5K, the refrigerant performance of the mixture refrigerant is comparable to that of R410A. Accordingly, the composition ratio of R32 can be set to a value equal to or greater than 50%, in which the temperature gradient is suppressed to a value equal to or less than approximately 5K, as illustrated in Fig. 2.

When a mixture refrigerant is configured to include 50 wt.% to 70 wt.% of R32, 20 wt.% to 30 wt.% of R1234ze, and 10 wt.% to 20 wt.% of R125, as described above, it is possible to provide the mixture refrigerant which has a refrigerant performance comparable to that of R410A, a GWP equal to or lower than half the GWP of R410A, and combustion properties lower than those of R32.

Furthermore, the refrigerant performance (in which the value of the temperature gradient is equal to or less than 5K) is comparable to that of R410A, and thus a refrigerant circuit comparable to a refrigerant circuit provided in an air conditioner of the related art using the mixture refrigerant according to the embodiment can be applied. Accordingly, the air conditioner of the related art can be used without modification.

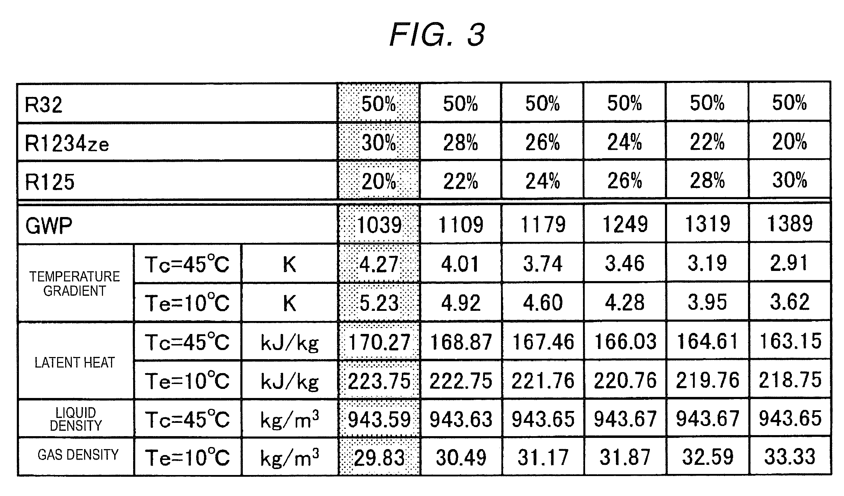

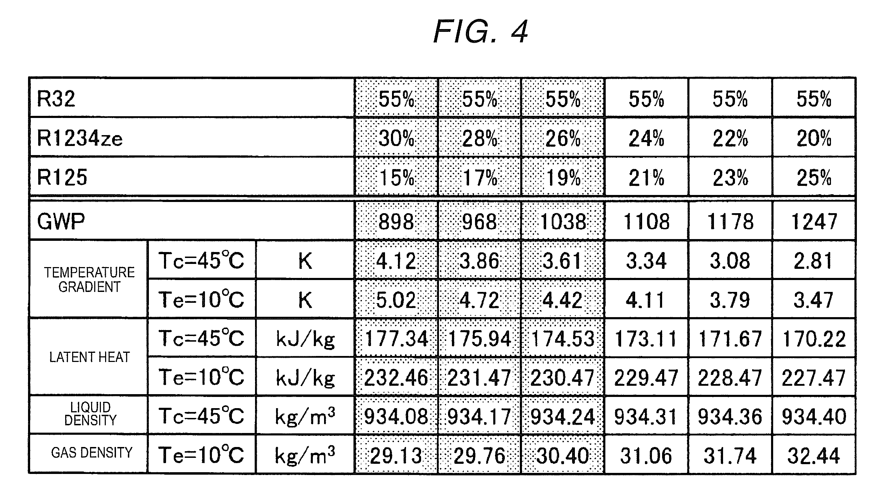

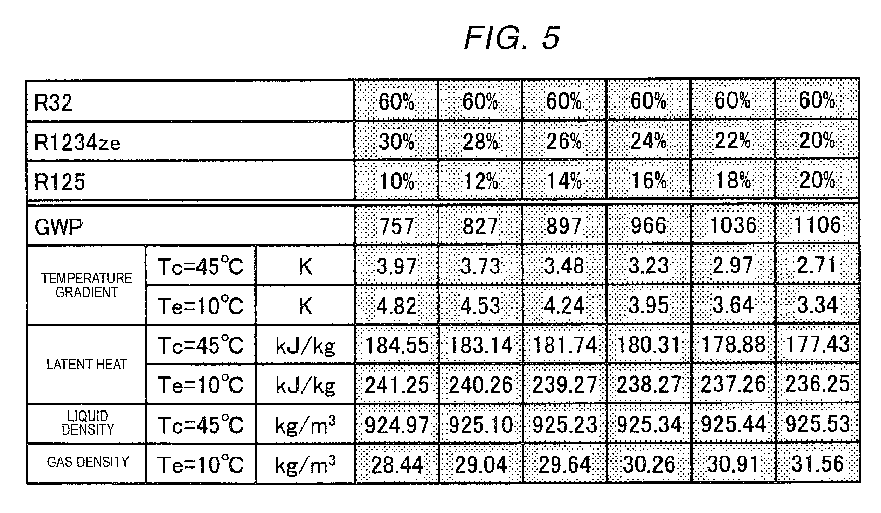

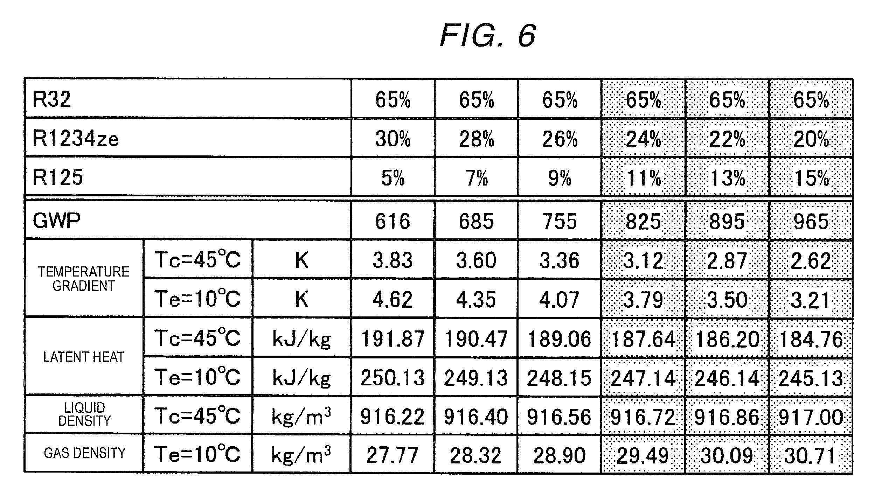

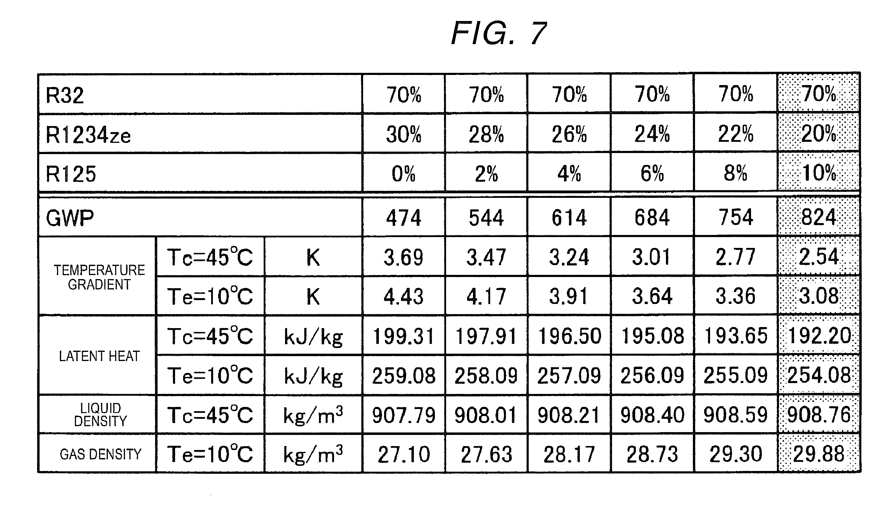

Figs. 3 to 7 are detail charts explaining refrigerant properties according to the composition ratios of the mixture refrigerants of the embodiment. The composition ratio which satisfies a condition in which there are 50 wt.% to 70 wt.% of R32, 20 wt.% to 30 wt.% of R1234ze, and 10 wt.% to 20 wt.% of R125 is illustrated with half-tone dot meshing.

### Air Conditioner

Next, an air conditioner according to the embodiment is described. The air conditioner according to the embodiment uses, as a refrigerant circulating in a refrigerant circuit, the mixture refrigerant described above, in other words, a mixture refrigerant which contains 50 wt.% to 70 wt.% of R32, 20 wt.% to 30 wt.% of R1234ze, 10 wt.% to 20 wt.% of R125.

Here, even in a case where the air conditioner includes a refrigerant circuit in which a large amount (equal to or more than 4 kg) of refrigerant circulates, the combustion velocity of the mixture refrigerant in use is reduced. Therefore, the safety of the air conditioner can be increased. Furthermore, when the mixture refrigerant of the embodiment is applied to an air conditioning apparatus, such as a large-scale multiple-air conditioning apparatus for a building, in which a large amount (equal to or more than, for example, 4 kg) of refrigerant is used, even when the refrigerant leaks to the outside of the air conditioning apparatus during an operation of the air conditioning apparatus or maintenance work, damage due to ignition can be reduced, compared to in a case of R32, because the combustion velocity of the mixture refrigerant is low.

According to the mixture refrigerant, the mixture refrigerant contains 50 wt.% to 70 wt.% of R32, 20 wt.% to 30 wt.% of R1234ze, and 10 wt.% to 20 wt.% of R125, as described above. As a result, it is possible to provide the mixture refrigerant which has a refrigerant performance comparable to that of R410A, a GWP lower than that of R410A, and combustion properties lower than those of R32.

In addition, according to the air conditioner, a refrigerant circuit provided in an air conditioner using R410A of the related art can be applied without change because the mixture refrigerant having the refrigerant performance comparable to that of R410A is used. Furthermore, the combustion properties of the mixture refrigerant are lower than those of R32, and thus the safety of the air conditioner can be increased.

It is possible to provide a mixture refrigerant which has a refrigerant performance comparable to that of R410A, a GWP lower than that of R410A, and combustion properties lower than those of R32.

In addition, the mixture refrigerant having the refrigerant performance comparable to that of R410A is used. Accordingly, a refrigerant circuit comparable to a refrigerant circuit provided in an air conditioner using R410A of the related art can be applied. In addition, the combustion properties of the mixture refrigerant are lower than those of R32. Accordingly, the safety of the air conditioner can be increased.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A mixture refrigerant comprising: 50 wt.% to 70 wt.% of R32; R1234ze; and R125.

2. The mixture refrigerant according to Claim 1,
wherein the mixture refrigerant contains 20 wt.% to 30 wt.% of the R1234ze.

3. The mixture refrigerant according to Claim 1 or 2,
wherein the mixture refrigerant contains 10 wt.% to 20 wt.% of the R125.

4. The mixture refrigerant according to any one of Claims 1 to 3,
wherein a temperature gradient is set to a value equal to or less than 5K.

5. The mixture refrigerant according to any one of Claims 1 to 4,
wherein a GWP is equal to or less than half a GWP of R410A.

6. The mixture refrigerant according to any one of Claims 1 to 5,
wherein a combustion velocity is set to a value equal to or less than 5 cm/s.

7. An air conditioner comprising the mixture refrigerant according to any one of Claims 1 to 6.

8. The air conditioner according to Claim 7, comprising:
a refrigerant circuit in which the mixture refrigerant of 4kg or more circulates.
